# EUROPEAN PATENT APPLICATION

(11) **EP 4 685 889 A1**
(43) Date of publication of application: **28.01.2026**
(21) Application number: 25190583.2
(22) Date of filing: 21.07.2025
(51) Int. Cl.: H01M 8/0432, H01M 8/04537, H01M 8/04701, H01M 8/04858

(54) **METHOD AND ASSOCIATED APPARATUS FOR CONTROLLING THE POWER OF A FUEL CELL STACK**

(30) Priority: 25.07.2024 CN 202411009093
(71) Applicant: Robert Bosch GmbH, 70442 Stuttgart (DE)
(72) Inventor: ZHANG, Huixiang, Jiangsu (CN); YUAN, Rui, Jiangsu (CN); LIU, Baoyuan, Jiangsu (CN); LI, Mingxun, Jiangsu (CN)

(57) **Abstract**

The present disclosure relates to methods and associated apparatuses for controlling the power of a fuel cell stack. The method comprises determining to change the output power of the fuel cell stack to a target power value. The method further comprises determining the temperature of the fuel cell stack. Additionally, the method comprises adjusting the output power of the fuel cell stack when the temperature of the fuel cell stack is greater than or equal to a predetermined temperature threshold. In this manner, the adjustment of the output power of the fuel cell stack can be adapted to the temperature of the fuel cell stack, thereby enabling the amount of water generated by the fuel cell stack to vary with temperature. Thus, the humidity of the membrane electrode in the fuel cell stack can be maintained within a reasonable range at different temperatures, thereby ensuring the operational efficiency of the fuel cell system.

## Description

### Technical Field

The present disclosure relates to the technical field of fuel cells, and more specifically, to a method and related apparatus for controlling the power of a fuel cell stack.

### Prior Art

Fuel cells offer the advantages of high energy conversion efficiency and zero emissions, and thus have significant applications in many fields. For example, fuel cells have become a widely used type of automotive power battery. Fuel cells are typically implemented in the form of a fuel cell system, which mainly comprises a fuel cell stack, an anode subsystem for supplying hydrogen, and a cathode subsystem for supplying oxygen. The fuel cell stack further includes a cathode, an anode, and a membrane electrode. The fuel cell stack primarily generates electrical energy through an electrochemical reaction between hydrogen at the anode and oxygen at the cathode on the membrane electrode.

For a fuel cell system, the humidity of the membrane electrode is closely related to the system's performance. If the humidity of the membrane electrode is too high, excessive water may block the gas diffusion layer or catalyst layer of the membrane electrode, thereby affecting the reaction of oxygen and hydrogen on the membrane electrode, which will result in decreased efficiency of the fuel cell system. If the humidity of the membrane electrode is too low, it becomes difficult for hydrogen ions to move within the membrane electrode, which will affect the transfer of charges in the membrane electrode and similarly lead to decreased efficiency of the fuel cell system.

### Summary of the Invention

Embodiments of the present disclosure provide a method and related apparatus for controlling the power of a fuel cell stack. In a first aspect of the present disclosure, a method for controlling the power of a fuel cell stack is provided. The method comprises determining to change the output power of the fuel cell stack to a target power value. The method further comprises determining the temperature of the fuel cell stack. Additionally, the method comprises adjusting the output power of the fuel cell stack when the temperature of the fuel cell stack is greater than or equal to a predetermined temperature threshold.

In a second aspect of the present disclosure, an apparatus for controlling the power of a fuel cell stack is provided. The apparatus comprises a determination unit configured to determine to change the output power of the fuel cell stack to a target power value. The apparatus further comprises a temperature detection unit configured to determine the temperature of the fuel cell stack. Additionally, the apparatus comprises a power adjustment unit configured to adjust the output power of the fuel cell stack when the temperature of the fuel cell stack is greater than or equal to a predetermined temperature threshold.

In a third aspect of the present disclosure, a controller is provided. The controller comprises one or more processors; and a storage device for storing one or more programs, the one or more programs, when executed by the one or more processors, causing the one or more processors to implement a method provided according to the first aspect of the present disclosure.

According to a fourth aspect of the present disclosure, a vehicle is provided. The vehicle comprises a fuel cell system and a controller as provided according to the third aspect of the present disclosure.

In a fifth aspect of the present disclosure, a machine-readable storage medium is provided. The machine-readable storage medium has machine-executable instructions stored thereon, wherein the machine-executable instructions are executed by a processor to implement the method provided according to the first aspect of the present disclosure.

In a sixth aspect of the present disclosure, a program product is provided, the program product comprising machine-executable instructions which, when executed, cause a machine to perform the method provided according to the first aspect of the present disclosure.

It will be understood that the content described in the Summary of the Invention is not intended to limit key or important features of the examples of the present disclosure, nor is it intended to limit the scope of the present disclosure. Other features of the present disclosure will become readily understood by the following description.

### Brief Description of the Drawings

Above and other features, advantages and aspects of various examples of the present disclosure will become more apparent in combination with the accompanying drawings and with reference to the following detailed description. In the accompanying drawings, like or similar accompanying drawings designate like or similar elements, wherein:
FIG. 1 illustrates a schematic diagram of an example environment in which multiple embodiments of the present disclosure may be implemented;
FIG. 2 illustrates a schematic diagram of a fuel cell system according to some embodiments of the present disclosure;
FIG. 3 illustrates a schematic diagram of a method for controlling the power of a fuel cell stack according to some embodiments of the present disclosure;
FIG. 4 illustrates a schematic diagram of a process for adjusting the output power of a fuel cell stack according to some embodiments of the present disclosure;
FIG. 5 illustrates a schematic diagram of a method for controlling the power of a fuel cell stack according to some embodiments of the present disclosure;
FIG. 6 illustrates a schematic diagram of a method for controlling the power of a fuel cell stack according to some embodiments of the present disclosure;
FIG. 7 illustrates a block diagram of an apparatus for controlling the power of a fuel cell stack according to some embodiments of the present disclosure; and
FIG. 8 illustrates a block diagram of a device that may implement multiple embodiments of the present disclosure.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to". The term "based on" should be understood as "at least partially based on". The term "one example" or "this example" should be understood as "at least one example". The terms "first", "second", etc. may refer to different or the same object. Other explicit and implicit definitions may be included below.

As previously described, the humidity of the membrane electrode of a fuel cell is closely related to the performance of the fuel cell system. In order to maintain high-efficiency operation of the fuel cell system, it is necessary to ensure that the humidity of the membrane electrode of the fuel cell stack remains within a reasonable range. The inventors of the present application have found that, in a fuel cell system, the humidity on the membrane electrode is primarily affected by the output power of the fuel cell stack and the temperature of the fuel cell stack. On one hand, the higher the output power of the fuel cell stack, the more intense the electrochemical reaction, resulting in greater water generation on the membrane electrode. On the other hand, the higher the temperature of the fuel cell stack, the more readily water is present in a gaseous state and more easily expelled with the airflow of the cathode subsystem. In some cases, when the temperature of the fuel cell stack is high but the output power is low, only a small amount of water is generated, which may lead to excessive drying of the membrane electrode of the fuel cell stack, thereby adversely affecting the normal operation of the fuel cell system.

To address this, embodiments of the present disclosure provide a solution for controlling the power of a fuel cell stack. In the embodiments of the present disclosure, when it is determined that the output power of the fuel cell stack is to be changed to a target power value, the temperature of the fuel cell stack may be determined, and, based on the temperature of the fuel cell stack, the output power of the fuel cell stack may be controlled. In this manner, when the power of the fuel cell stack is about to change, the output power of the fuel cell stack can be adapted to the temperature of the fuel cell stack. For example, when the temperature of the fuel cell stack is relatively high and the power is about to be reduced, the fuel cell stack can be maintained at an appropriate output power, thereby ensuring that the water generated on the membrane electrode remains within a reasonable range. Thus, excessive drying of the membrane electrode of the fuel cell stack can be avoided, and the operational efficiency of the fuel cell system can be improved.

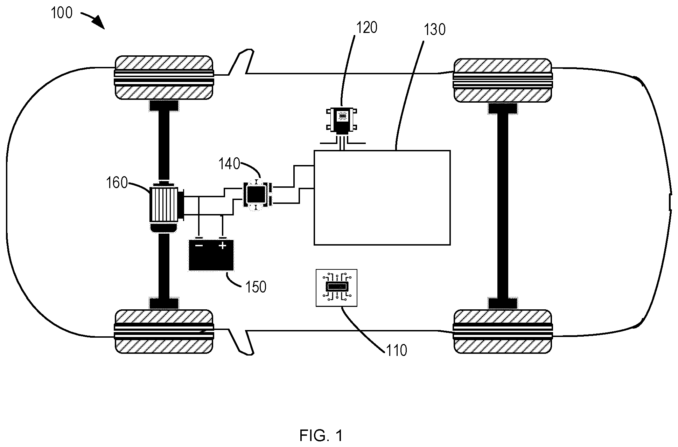

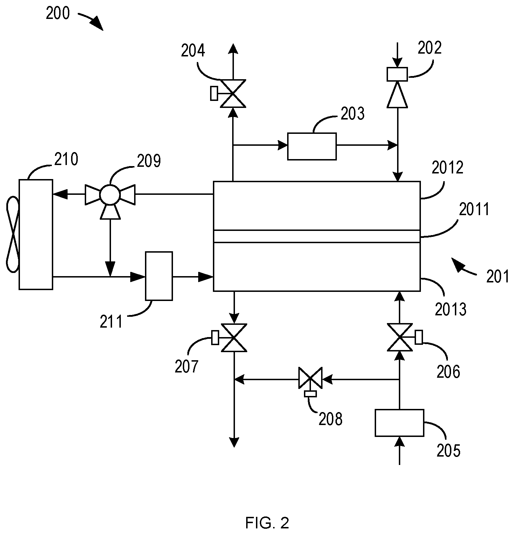

The following provides a schematic description of the environment in which embodiments of the present disclosure may be implemented, with reference to FIG. 1 and FIG. 2. FIG. 1, taking vehicle 100 as an example, illustrates a schematic diagram of an exemplary environment in which multiple embodiments of the present disclosure may be implemented. By way of example, as shown in FIG. 1, vehicle 100 may include components such as a vehicle control unit (VCU) 110, a fuel cell control unit (FCCU) 120, a fuel cell system 130, a DC/DC converter 140, a battery 150, and a motor 160.

The VCU 110 may communicate with the FCCU 120 to control the output power of the fuel cell system 130. The VCU 110 may also communicate with the DC/DC converter 140, the battery 150, and the motor 160, thereby controlling the output power of the motor 160 and distributing the required output power of the vehicle 100 between the fuel cell system 130 and the battery 150. The FCCU 120 may manage and control the fuel cell system 130. For example, the FCCU 120 may directly control the output power of the fuel cell stack within the fuel cell system 130.

In some embodiments, the FCCU 120 may determine the temperature of the fuel cell stack in the fuel cell system 130 and, based on the temperature of the fuel cell stack, control the output power of the fuel cell stack within the fuel cell system. In some embodiments, the VCU 110 may control the output power of the fuel cell stack in the fuel cell system 130 by sending control instructions to the FCCU 120.

In some embodiments, the FCCU 120 may detect the temperature of the fuel cell stack in the fuel cell system 130 and, based on this temperature, send a power control request to the VCU 110. The power control request may request the VCU 110 to adjust the output power of the fuel cell stack in the fuel cell system to a recommended power value. In some embodiments, the VCU 110, based on a braking command from the user or an assisted driving system, sends a control instruction to the FCCU 120 to reduce the output power of the fuel cell stack. Upon receiving this control instruction, the FCCU 120 may detect the temperature of the fuel cell stack in the fuel cell system 130 and, based on this temperature, send a recommended power value to the VCU 110, indicating that the VCU 110 may adjust the output power of the fuel cell stack 130 to this recommended power value.

FIG. 2 illustrates a schematic diagram of a fuel cell system 200 according to some embodiments of the present disclosure. For example, the fuel cell system 130 in FIG. 1 may correspond to the fuel cell system 200 in FIG. 2. Referring to FIG. 2, the fuel cell system 200 may include a fuel cell stack 201, a hydrogen injector 202, a hydrogen recirculation pump 203, a hydrogen purge valve 204, an air compressor 205, an upstream shut-off valve 206, a bypass valve 207, an exhaust throttle valve 208, a thermostat 209, a radiator 210, and a coolant pump 211, among other components. The fuel cell stack 201 may include a membrane electrode 2011, an anode 2012, and a cathode 2013. Hydrogen at the anode 2012 and oxygen at the cathode 2013 may undergo an electrochemical reaction at the membrane electrode 2011 to generate electrical energy.

The hydrogen injector 202 may supply hydrogen from the hydrogen storage system to the anode 2012 and control the pressure and flow rate of the hydrogen. The hydrogen recirculation pump 203 may recirculate unreacted hydrogen from the outlet of the anode 2012 back to the inlet of the anode 2012. The hydrogen purge valve 204, also referred to as a purge valve, may discharge impurity gases (e.g., nitrogen) from the anode 13012 when the concentration of impurity gases increases. The hydrogen injector 202, hydrogen recirculation pump 203, hydrogen purge valve 204, and anode 2012 may be connected via pipelines to collectively form the anode subsystem (also referred to as the anode loop) of the fuel cell system 200.

The air compressor 205 may pressurize air to supply the cathode 2013 of the fuel cell stack 201 with air. The upstream shut-off valve 206 remains open during operation of the fuel cell system 200 and closes when the fuel cell system 200 is shut down. The exhaust throttle valve 207 may discharge the reacted cathode gas, adjust the gas pressure at the cathode 2013 outlet, and regulate the flow rate of gas supplied to the fuel cell stack 201. The bypass valve 208 may open when the upstream shut-off valve 206 is closed to discharge air supplied by the air compressor 205. The air compressor 205, upstream shut-off valve 206, exhaust throttle valve 207, bypass valve 208, and cathode 2013 are connected via pipelines to collectively form the cathode subsystem (also referred to as the cathode loop) of the fuel cell system 200.

The thermostat 209 may regulate the flow rate of coolant in the thermal management system by adjusting the degree of opening, thereby achieving precise temperature control. The radiator 210 may transfer the heat of the coolant to the environment, lowering the coolant temperature and thereby removing the heat generated by the fuel cell stack 201. The coolant pump 211 may regulate the flow rate of the coolant by adjusting its speed, thereby controlling the temperature and ensuring that the operating temperature of the fuel cell stack 201 remains within an appropriate range. The thermostat 209, radiator 210, and coolant pump 211 are connected via pipelines to collectively form the thermal management subsystem of the fuel cell system 200.

The components of the fuel cell system 200 may be controlled by the FCCU, which may, for example, correspond to the FCCU 120 in FIG. 1. In some embodiments, the FCCU 120 may send instructions to these components in the fuel cell system 130 to control their operation. The FCCU 120 may also periodically receive messages from these components. In some embodiments, the FCCU 120 may receive the coolant temperature detected by a temperature sensor configured in the thermal management subsystem and, based on this, determine the temperature of the fuel cell stack 201. In some embodiments, the FCCU 120 may control the amount of air entering the cathode 2013 by controlling the speed of the air compressor 205, thereby controlling the output power of the fuel cell stack 201.

In the vehicle 100 shown in FIG. 1 and the fuel cell system 200 shown in FIG. 2, information exchange between various components (for example, between the VCU 110 and the FCCU 120) may be conducted via wired or wireless communication methods, including but not limited to Controller Area Network (CAN) bus, Local Interconnect Network (LIN) bus, Media Oriented Systems Transport (MOST) bus, in-vehicle Ethernet, Wi-Fi, Bluetooth, and the like.

It should be understood that FIG. 1 and FIG. 2 are merely exemplary illustrations of the present disclosure and should not be construed as limiting the scope of the solutions provided herein. For example, in some embodiments, the fuel cell system 200 may include more or fewer components. In certain embodiments, the fuel cell system 130 in vehicle 100 may also be another type of fuel cell system. In some embodiments, vehicle 100 may further include more or fewer components. In some embodiments of the present disclosure, the fuel cell system may also be a fuel cell system configured in other devices, such as, but not limited to, vehicles, yachts, aerospace equipment, underwater propulsion devices, and so on. That is, apart from vehicles, the embodiments of the present disclosure may also be applied to other scenarios.

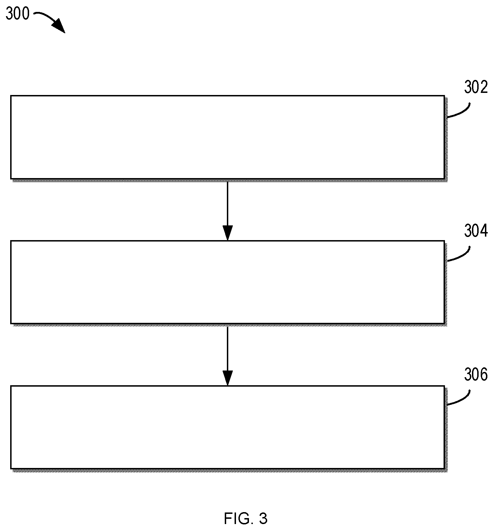

FIG. 3 illustrates a flowchart of a method 300 for controlling the power of a fuel cell stack according to some embodiments of the present disclosure. The method 300 may be executed by an apparatus or electronic device for controlling a fuel cell system, for example, by the FCCU 120 in vehicle 100. For ease of explanation, the following description uses a battery controller as the executing entity for method 300 by way of example. The battery controller may be implemented in software and/or hardware, and may, for example, be the FCCU of the fuel cell system. Referring to FIG. 3, method 300 may include blocks 302 to 306.

At block 302, the battery controller determines to change the output power of the fuel cell stack to a target power value. In some embodiments, the battery controller receives a control instruction from another device to change the output power of the fuel cell stack to the target power value. Upon receiving such a control instruction, the battery controller determines to change the output power of the fuel cell stack to the target power value. In some embodiments, the control instruction may also be generated by the battery controller itself. By way of example, in some embodiments, the battery controller may be the vehicle's VCU. Upon receiving a user braking command, the VCU may generate a control instruction to change the output power of the fuel cell stack to the target power value.

At block 304, the battery controller determines the temperature of the fuel cell stack. In some embodiments, a cooling subsystem may be deployed in the fuel cell system, which may cool the fuel cell stack via coolant. The cooling subsystem may be equipped with a sensor for detecting the coolant temperature, and the battery controller may obtain the coolant temperature from this sensor as the temperature of the fuel cell stack. In some embodiments, a sensor for directly detecting the temperature of the fuel cell stack may be deployed in the fuel cell stack of the fuel cell system, and the battery controller may obtain the temperature of the fuel cell stack from this sensor. In some embodiments, the sensor configured in the cooling subsystem or in the fuel cell stack may periodically send the detected temperature to the battery controller, thereby enabling the battery controller to realize real-time detection of the fuel cell stack temperature. It should be understood that the above description regarding determination of the fuel cell stack temperature is merely illustrative and should not be construed as limiting the embodiments of the present disclosure. In some embodiments, the temperature of the fuel cell stack may also be determined in other ways.

At block 306, the battery controller adjusts the output power of the fuel cell stack when the temperature of the fuel cell stack is greater than or equal to a predetermined temperature threshold. In some embodiments, the battery controller may increase the output power of the fuel cell stack. In some embodiments, a temperature threshold and a recommended power value are predefined in the battery controller. When the temperature of the fuel cell stack is greater than or equal to the temperature threshold, the battery controller may adjust the output power of the fuel cell stack to be greater than or equal to the recommended power value. In some embodiments, the battery controller may, after determining that the temperature of the fuel cell stack has exceeded the temperature threshold for a certain duration (hereinafter referred to as t1 for differentiation), then adjust the output power of the fuel cell stack.

In some embodiments, the predefined recommended power value may be a power value determined in advance through experiments, which, under the condition that the temperature is greater than the temperature threshold, can maintain the humidity of the membrane electrode within a reasonable range. When the output power of the fuel cell stack is greater than or equal to the recommended power value, even if the temperature of the fuel cell stack is too high, the fuel cell stack can still generate sufficient water and maintain the humidity of the membrane electrode within a reasonable range. By adjusting the output power of the fuel cell stack based on temperature in this manner, the humidity of the membrane electrode can always be maintained within a reasonable range, thereby ensuring stable and efficient operation of the fuel cell system.

In some embodiments, the battery controller may obtain a correspondence between multiple different temperatures and multiple different recommended power values, which may also be predefined in the memory of the battery controller. The battery controller may determine the recommended power value corresponding to the actual temperature of the fuel cell stack based on this correspondence, and may adjust the output power of the fuel cell stack to be equal to the recommended power value corresponding to the actual temperature. In some embodiments, the battery controller may control the output power of the fuel cell stack to be greater than the recommended power value.

For the fuel cell stack in the fuel cell system, the amount of water generated at different power levels may be pre-calibrated through experiments, and the correspondence between the rate of water loss on the membrane electrode and the temperature of the fuel cell stack may also be pre-calibrated through experiments. Therefore, a correspondence between temperature and output power that can maintain the humidity of the membrane electrode within a reasonable range can be determined in advance. By controlling the output power of the fuel cell stack based on this correspondence, flexible and dynamic control of the output power of the fuel cell stack can be achieved, so that the output power of the fuel cell stack can always adapt to the temperature of the fuel cell stack, and the humidity of the membrane electrode can be maintained within a reasonable range at different temperatures, thereby ensuring stable and efficient operation of the fuel cell system.

In some embodiments, the battery controller may adjust the output power of the fuel cell stack based on the current output power and temperature of the fuel cell stack. In some embodiments, the battery controller may determine the current output power of the fuel cell stack and, upon determining that the current output power is greater than or equal to a predetermined power threshold, then adjust the output power of the fuel cell stack. In some embodiments, the battery controller may further adjust the output power of the fuel cell stack when it is determined that the duration for which the current output power of the fuel cell stack exceeds a predetermined power threshold is greater than a predetermined duration (hereinafter referred to as t2 for differentiation).

In some embodiments, the battery controller may, upon receiving a control instruction to reduce the output power of the fuel cell stack to a target power value, adjust the output power of the fuel cell stack based on the temperature of the fuel cell stack. That is, the battery controller may adjust the output power of the fuel cell stack during the process of reducing the power of the fuel cell stack. In some embodiments, during the process of reducing the output power of the fuel cell stack, the adjustment by the battery controller may involve first controlling the output power of the fuel cell stack to decrease to a recommended power value and maintaining it for a period of time, and then further reducing the output power to the target power value.

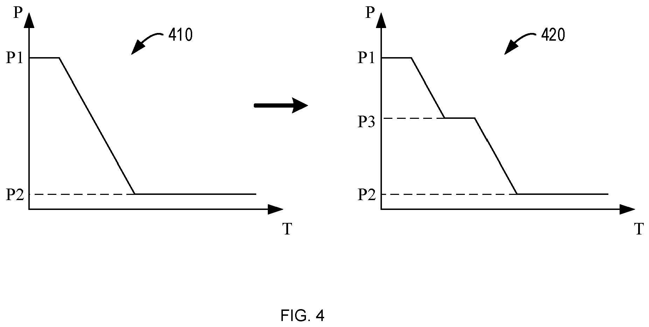

By way of example, this process is illustrated in FIG. 4. FIG. 4 illustrates a schematic diagram of a process for adjusting the output power of a fuel cell stack according to some embodiments of the present disclosure. Both curve 410 and curve 420 in FIG. 4 correspond to the process in which the output power of the fuel cell stack decreases from P1 to P2. Specifically, curve 410 represents the change in output power of the fuel cell stack when the battery controller does not execute method 300, while curve 420 represents the change in output power when the battery controller executes method 300. Referring to curve 410, in the absence of executing method 300, the output power of the fuel cell stack decreases directly from P1 to P2. In contrast, when method 300 is executed, as shown by curve 420, the output power of the fuel cell stack first decreases from P1 to the recommended power value P3 and is maintained for a period of time, and then further decreases from the recommended power value to the target power value P2.

In some embodiments, during the process of reducing the output power of the fuel cell stack, after controlling the output power to decrease to the recommended power value, the battery controller may maintain the output power at the recommended power value and monitor the temperature of the fuel cell stack in real time. When the temperature of the fuel cell stack is less than or equal to a predefined specific temperature value, the battery controller then controls the output power of the fuel cell stack to decrease from the recommended power value to the target power value. It should be understood that the predefined specific temperature value here may be the same as or different from the temperature threshold described in block 306 above. In some embodiments, the battery controller may further control the output power of the fuel cell stack to decrease from the recommended power value to the target power value when the duration for which the temperature of the fuel cell stack is less than or equal to the predefined specific temperature value exceeds a predefined duration (hereinafter referred to as t3 for differentiation).

In some embodiments, during the process of reducing the output power of the fuel cell stack, after controlling the output power to decrease to the recommended power value, the battery controller may maintain the output power at the recommended power value for a predefined duration (hereinafter referred to as t4 for differentiation), and then further control the output power to decrease from the recommended power value to the target power value.

In some embodiments, during the process of reducing the output power of the fuel cell stack, the battery controller may first determine the magnitude of the output power and the temperature of the fuel cell stack. When the output power is greater than or equal to a predefined power threshold and/or the temperature of the fuel cell stack is greater than or equal to a predefined temperature threshold, the battery controller may then control the output power of the fuel cell stack to first decrease to the recommended power value and maintain it for a period of time, and then further decrease to the target power value.

In some embodiments, during the process of reducing the output power of the fuel cell stack, the battery controller may further control the output power to first decrease to the recommended power value and maintain it for a period of time, and then further decrease to the target power value, when it is determined that the duration for which the output power of the fuel cell stack is greater than or equal to the predefined power threshold is greater than or equal to a predefined duration (hereinafter referred to as t5 for differentiation), and the duration for which the temperature of the fuel cell stack is greater than or equal to the predefined temperature threshold is greater than or equal to a predefined duration (hereinafter referred to as t6 for differentiation). It should be understood that the durations involved in the embodiments of the present disclosure, such as t1, t2, t3, t4, t5, or t6, may have the same or different values, and the present disclosure is not limited in this regard.

When the fuel cell stack operates at a relatively high output power, its temperature is relatively high. If the output power of the fuel cell stack is directly reduced to the target power value under such circumstances, the water generated in the fuel cell stack will rapidly decrease, while the temperature of the fuel cell stack decreases slowly, resulting in rapid water loss from the membrane electrode and a decrease in the humidity of the membrane electrode. By first controlling the output power of the fuel cell stack to a relatively high recommended power value, an appropriate amount of water can continue to be generated in the fuel cell stack, thereby avoiding a rapid decrease in water content and maintaining the humidity of the membrane electrode within an appropriate range, which in turn helps prevent a decrease in the efficiency of the fuel cell system.

In some embodiments, the battery controller may directly control the output power of the fuel cell stack. For example, the battery controller may directly control the air supply of the cathode subsystem in the fuel cell system based on the temperature of the fuel cell stack, thereby controlling the output power of the fuel cell stack. In some embodiments, the control of the output power of the fuel cell stack by the battery controller is performed indirectly.

By way of example, in some embodiments, the fuel cell system is deployed in other devices, such as vehicles, and the output power of the fuel cell stack is subject to allocation and regulation by a power controller (such as a vehicle control unit, VCU) in the other device. In other words, the battery controller needs to receive a control instruction from the power controller in order to change or adjust the output power of the fuel cell stack. In this case, the control of the output power of the fuel cell stack by the battery controller may be performed via the power controller.

In the embodiments of the present disclosure, the power controller is a controller in the device where the fuel cell system is deployed, used for regulating the output power of the fuel cell system. By way of example, the fuel cell system may be deployed in a vehicle or other equipment, and the power controller may be a controller within such equipment for performing power distribution. The power controller may, based on user operation instructions for the equipment, send control instructions to the battery controller of the fuel cell system, thereby regulating the output power of the fuel cell system. As an example, the fuel cell system is deployed in a vehicle 100, the power controller may be the VCU 110, and the battery controller may be the FCCU 120. The VCU 110 may, based on user instructions, send control instructions to the FCCU 120 to control the output power of the fuel cell stack.

In some embodiments, the battery controller may change or adjust the output power of the fuel cell stack by sending a power control request to the power controller, requesting that the output power of the fuel cell stack be adjusted to a recommended power value. The power control request may be a request for the power controller to adjust the output power of the fuel cell stack to the recommended power value. The battery controller may send the power control request to the power controller based on the temperature of the fuel cell stack.

In some embodiments, the battery controller may, upon receiving from the power controller an instruction to reduce the output power of the fuel cell stack to a target power value, determine the temperature of the fuel cell stack and, based on the temperature, send a power control request to the power controller. That is, when the power controller is about to reduce the output power of the fuel cell stack, the battery controller may indicate to the power controller an appropriate output power value of the fuel cell stack that can maintain the humidity of the membrane electrode.

In some embodiments, the battery controller may periodically send power control requests at a predefined frequency. In some embodiments, after the battery controller determines that the temperature of the fuel cell stack is too high and/or the output power of the fuel cell stack is too high and begins to send power control requests to the power controller, the battery controller may detect the current temperature of the fuel cell stack in real time. If the current temperature of the fuel cell stack is less than or equal to a predefined temperature threshold, the battery controller may stop sending power control requests. In some embodiments, the battery controller may detect the current output power value of the fuel cell stack in real time and may stop sending power control requests if the current output power value remains at the recommended power value for a predefined duration (e.g., the aforementioned t4). In some embodiments, after stopping the sending of power control requests, the battery controller may further send a second power control request to reduce the output power of the fuel cell stack to the target power value, thereby enabling the power controller to ultimately reduce the output power of the fuel cell stack to the target power value.

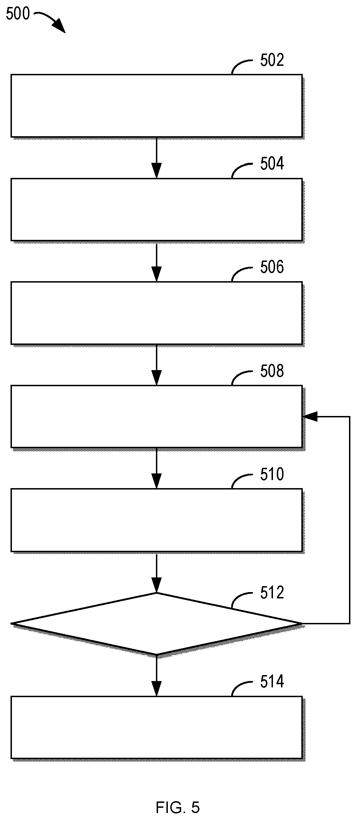

By way of example, FIG. 5 illustrates a schematic flowchart of a method 500 for controlling the power of a fuel cell stack according to some embodiments of the present disclosure. Referring to FIG. 5, method 500 may include blocks 502 to 514. At block 502, the battery controller receives a control instruction from the power controller to reduce the output power of the fuel cell stack to a target power value. At block 504, the battery controller obtains the output power and temperature of the fuel cell stack. At block 506, the battery controller determines whether the duration for which the output power of the fuel cell stack is greater than or equal to a predetermined power threshold is greater than or equal to a first predetermined duration, and/or whether the duration for which the temperature of the fuel cell stack is greater than or equal to a predetermined temperature is greater than a second predetermined duration.

At block 508, the battery controller sends a first power control request to the power controller, the first power control request being used to request the power controller to adjust the output power of the fuel cell stack to the recommended power value. At block 510, the battery controller obtains the current temperature and current power of the fuel cell stack. At block 512, the battery controller determines whether at least one of the following conditions is satisfied: (1) The duration for which the current temperature of the fuel cell stack is less than or equal to the predetermined temperature threshold is greater than or equal to a third predetermined duration; (2) The duration for which the current power of the fuel cell stack equals the recommended power value is greater than or equal to a fourth predetermined duration. If yes, proceed to block 514; if not, return to block 508. At block 514, the battery controller sends a second power control request to the power controller, the second power control request being used to request the power controller to reduce the output power of the fuel cell stack to the target power value.

The power control request is a reference signal sent by the battery controller to the power controller, which the power controller may or may not accept. In some embodiments, the power controller will control the output power of the fuel cell stack based on the power control request, adjusting the output power to the recommended value. In some embodiments, the power controller will not control the output power of the fuel cell stack based on the power control request. For example, during the process of reducing the output power of the fuel cell stack, even if a power control request is received, the power controller may directly reduce the output power to the target power value. In this case, the battery controller may detect that the output power of the fuel cell stack has not remained at the recommended value for the predetermined duration, determine that the power controller has not accepted the power control request, and stop sending power control requests. In this way, redundant information transmission can be avoided.

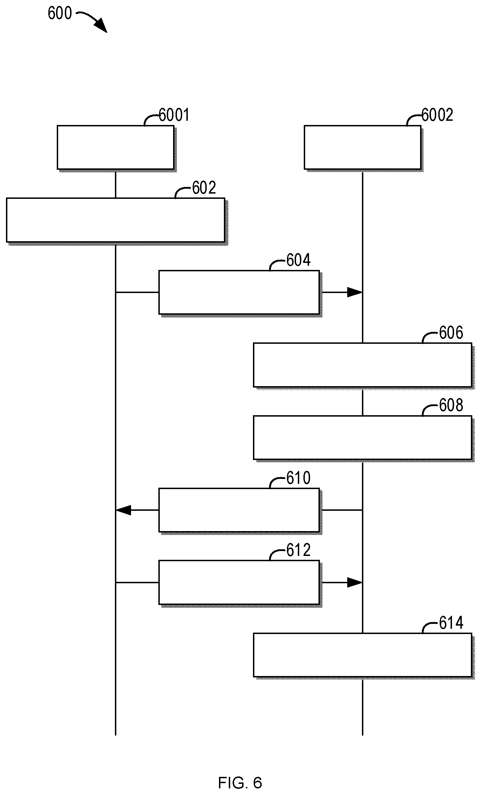

FIG. 6, taking the interaction between the FCCU and VCU in a vehicle as an example, illustrates a flowchart of a method 600 for controlling the power of a fuel cell stack according to some embodiments of the present disclosure. In FIG. 6, VCU 6001 may, for example, correspond to VCU 110 in FIG. 1, and FCCU 6002 may correspond to FCCU 120 in FIG. 1. Referring to FIG. 6, method 600 may include blocks 602 to 614. At block 602, VCU 6001 receives a braking instruction, which may be determined based on the driver's operation or obtained from an auxiliary driving system. At block 604, VCU 6001 sends a control instruction to FCCU 6002, the control instruction being used to control the fuel cell stack to reduce its output power to the target power. In some embodiments, VCU 6001 may determine the required output power value of the vehicle based on the braking instruction and, according to a predefined power distribution strategy, determine the target power that the fuel cell stack needs to achieve.

In block 606, upon receiving a control instruction from the VCU 6001, the FCCU 6002 acquires the current temperature of the fuel cell stack and the current output power of the fuel cell stack. In block 608, the FCCU 6002 determines whether the duration for which the current temperature of the fuel cell stack is greater than or equal to a predetermined temperature threshold is greater than or equal to a first predetermined duration, and/or whether the duration for which the current output power of the fuel cell stack is greater than or equal to a predetermined power threshold is greater than or equal to a second predetermined duration. In block 610, the FCCU 6002 sends a power control instruction to the VCU 6001, the power control instruction being used to request the VCU 6001 to reduce the output power of the fuel cell stack to a recommended power value. In block 612, the VCU 6001 sends a new control instruction to the FCCU 6002, the new control instruction being used to control the fuel cell stack to reduce its output power to the recommended power value. In block 614, the FCCU 6002, based on the new control instruction sent by the VCU 6001, controls the output power of the fuel cell stack to be reduced to the recommended power value.

It should be understood that the method 600 shown in FIG. 6 is merely one example of the present disclosure and should not be construed as limiting the present disclosure. For example, in some embodiments, after executing block 614, the FCCU 6002 may also execute blocks 510 to 514 of the aforementioned method 500. In some embodiments, after executing block 610, the VCU 6001 may not send a new control instruction to the FCCU 6002. In this case, the FCCU 6002 may reduce the output power of the fuel cell stack to a target power value based on the control instruction received in block 604.

Through this approach, during the process in which the VCU of the vehicle controls the output power of the fuel cell stack based on a braking instruction, the FCCU in the fuel cell system may indicate to the VCU, based on the temperature of the fuel cell stack, a recommended output power value for the fuel cell stack. Accordingly, the VCU may, based on the indication from the FCCU, control the fuel cell stack to achieve the recommended power value. In this way, the fuel cell stack can be controlled to generate an appropriate amount of water, thereby ensuring that the humidity of the membrane electrode is within a reasonable range, which in turn ensures the high-efficiency operation of the fuel cell system.

In some embodiments of the present disclosure, after the output power of the fuel cell stack is adjusted to the recommended power value, if this causes the total output power of the device (e.g., vehicle) in which the fuel cell system is deployed to exceed the required output power, the excess output power may be stored by an energy storage device such as a battery. If the total output power of the device in which the fuel cell system is deployed is less than the required output power, the deficit may be supplied by other energy sources such as a battery. Thus, it is possible to maintain the humidity of the membrane electrode of the fuel cell stack within a normal range while also maintaining the overall output power of the device in which the fuel cell is deployed at a stable level.

In some embodiments, the battery controller may also be the same device as the power controller in the device in which the fuel cell system is deployed. That is, the power controller in the device in which the fuel cell system is deployed may execute the method 300 provided in the embodiments of the present disclosure. By way of example, the fuel cell system may be deployed in a vehicle, the battery controller may be the vehicle's VCU, and the VCU may execute the aforementioned method 300.

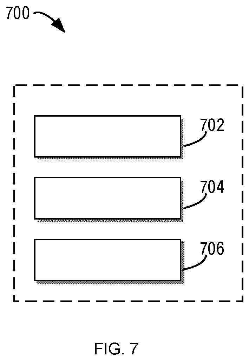

FIG. 7 illustrates a block diagram of an apparatus 700 for controlling the power of a fuel cell stack according to some embodiments of the present disclosure. By way of example, as shown in FIG. 7, the apparatus 700 may include a determination unit 702 configured to determine to change the output power of the fuel cell stack to a target power value. The apparatus 700 may further include a temperature detection unit 704 configured to determine the temperature of the fuel cell stack. Additionally, the apparatus 700 may include a power adjustment unit 706 configured to adjust the output power of the fuel cell stack when the temperature of the fuel cell stack is greater than or equal to a predetermined temperature threshold.

In some embodiments, the power adjustment unit 706 includes a first power adjustment unit configured to adjust the output power of the fuel cell stack to a predefined recommended power value corresponding to the temperature of the fuel cell stack.

In some embodiments, the first power adjustment unit includes a second power adjustment unit configured to adjust the output power of the fuel cell stack to the predefined recommended power value when the temperature of the fuel cell stack is greater than or equal to the predetermined temperature threshold and the duration for which the temperature is greater than or equal to the predetermined temperature threshold is greater than or equal to a first predetermined duration.

In some embodiments, the determination unit 702 includes a receiving unit configured to receive a control instruction for reducing the output power of the fuel cell stack to a target power value, wherein the target power value is less than the predefined recommended power value. The temperature detection unit 704 is configured to determine the temperature of the fuel cell stack when the receiving unit receives the control instruction.

In some embodiments, the power adjustment unit 706 includes a third power adjustment unit configured to adjust the output power of the fuel cell stack to the recommended power value when the duration for which the temperature of the fuel cell stack is greater than or equal to the predetermined temperature threshold is greater than or equal to the first predetermined duration, and the duration for which the output power is greater than or equal to the predetermined power threshold is greater than or equal to a second predetermined duration.

In some embodiments, the third power adjustment unit includes a first sending unit configured to periodically send, at a predetermined frequency, a first power control request to the power controller, the first power control request being used to request the output power of the fuel cell stack to be reduced to the recommended power value.

In some examples, the apparatus 700 further comprises: A second temperature detection unit is configured to determine the current temperature of the fuel cell stack; and a fourth power adjustment unit is configured to stop sending the first power control request when the current temperature is less than or equal to the predetermined temperature threshold.

In some examples, the apparatus 700 further comprises: An output power detection unit is configured to determine the current output power of the fuel cell stack; and a fifth power adjustment unit is configured to stop sending the first power control request when the duration for which the current output power equals the recommended power value is greater than a third predetermined duration.

In some embodiments, the apparatus 700 further includes a second sending unit configured to send a second power control request to the power controller, the second power control request being used to request the power controller to reduce the output power of the fuel cell stack to the target power value.

In some embodiments, where the fuel cell stack is deployed in a vehicle, the power controller may be the vehicle control unit.

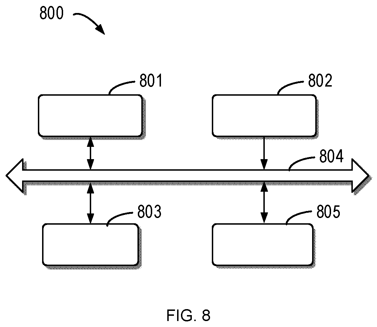

FIG. 8 illustrates a schematic block diagram of an exemplary device 800 that may be used to implement the examples of the present disclosure. The apparatus 800 may correspond to the battery controller described in the foregoing method embodiments. The FCCU 120 in FIG. 1 or the FCCU 6002 in FIG. 6 may also be implemented using the apparatus 800. As shown in FIG. 8, the apparatus 800 comprises a processor 801, which can execute various appropriate actions and processes according to computer program instructions stored in a read-only memory (ROM) 802 and loaded into a random access memory (RAM) 803. Various programs and data required for the operation of the device 800 may also be stored in the RAM 803. The processor 801, the ROM 802, and the RAM 803 are interconnected through a bus 804. An input/output (I/O) interface 805 is also connected to the bus 804.

The various processes and procedures described above, such as method 300, method 500 and method 600, can be executed by processor 801. For example, in some embodiments, method 300, method 500 and method 600 can be implemented as a computer software program that is tangibly embodied in a machine-readable medium. In some embodiments, portions or all of the computer program can be loaded and/or installed onto device 800 via ROM 802. When the computer program is loaded into the RAM 803 and executed by the processor 801, one or more actions of the method 300, method 500 and method 600 described above may be performed.

The functions described above herein can be performed, at least in part, by one or more hardware logic components. For example, and without limitation, exemplary types of hardware logic components that can be used comprise: Field Programmable Gate Arrays (FPGA), Application Specific Integrated Circuits (ASIC), Application Specific Standard Products (ASSP), System on a Chip (SOC), Complex Programmable Logic Devices (CPLD), and the like.

The program code for implementing the methods of the present disclosure can be written in any combination of one or more programming languages. This program code can be provided to a processor or controller of a general-purpose computer, special-purpose computer, or other programmable data processing devices such that the program code, when executed by the processor or controller, causes the functions/operations specified in the flowcharts and/or block diagrams to be implemented. The program code can be executed entirely on the machine, partly on the machine, as a stand-alone software package partly on the machine and partly on a remote machine, or entirely on a remote machine or server.

In the context of the present disclosure, a machine-readable storage medium can be a tangible medium that can contain or store programs for use by or in conjunction with an instruction execution system, apparatus, or device. A machine-readable medium can be a machine-readable signal medium or a machine-readable storage medium. The machine-readable medium can comprise, but is not limited to, electronic, magnetic, optical, electromagnetic, infrared, or semiconductor systems, apparatuses, or devices, or any suitable combination of the foregoing. More specific examples of the machine-readable storage medium would comprise electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing. Furthermore, although operations have been depicted in a specific order, it should be understood that such operations are not required to be performed in the specific order shown or in sequential order, nor are all illustrated operations required to be performed to achieve the desired results. In certain contexts, multitasking and parallel processing may be advantageous. Similarly, although several specific implementation details are included in the above discussion, these should not be construed as limiting the scope of the present disclosure. Certain features described in the context of separate examples can also be implemented in combination in a single implementation. Conversely, various features described in the context of a single implementation can also be implemented separately or in any suitable sub-combination in multiple implementations.

Although the subject matter has been described in language specific to structural features and/or methodological acts, it is to be understood that the subject matter defined in the appended Claims is not necessarily limited to the specific features or acts described above. Rather, the specific features and operations described above are merely exemplary forms of implementing the Claims.

## Claims

1. A method (300) for controlling the power of a fuel cell stack, comprising:
determining (302) to change the output power of the fuel cell stack to a target power value;
determining (304) the temperature of the fuel cell stack; and
adjusting (306) the output power of the fuel cell stack when the temperature of the fuel cell stack is greater than or equal to a predetermined temperature threshold.

2. The method according to claim 1, wherein adjusting (306) the output power of the fuel cell stack comprises:
adjusting the output power of the fuel cell stack to a predefined recommended power value corresponding to the temperature of the fuel cell stack.

3. The method according to claim 1, wherein adjusting (306) the output power of the fuel cell stack comprises:
when the temperature of the fuel cell stack is greater than or equal to the predetermined temperature threshold, and the duration for which the temperature is greater than or equal to the predetermined temperature threshold is greater than or equal to a first predetermined duration, adjusting the output power of the fuel cell stack to a predefined recommended power value.

4. The method according to claim 1, wherein determining (302) to change the output power of the fuel cell stack to the target power value comprises:
receiving a control instruction to reduce the output power of the fuel cell stack to the target power value, wherein the target power value is less than the predefined recommended power value.

5. The method according to claim 4, wherein adjusting (306) the output power of the fuel cell stack comprises:
when the duration for which the temperature of the fuel cell stack is greater than or equal to the predetermined temperature threshold is greater than or equal to the first predetermined duration, and the duration for which the output power is greater than or equal to a predetermined power threshold is greater than or equal to a second predetermined duration, adjusting the output power of the fuel cell stack to the recommended power value.

6. The method according to claim 5, wherein adjusting the output power of the fuel cell stack to the recommended power value comprises:
periodically sending, at a predetermined frequency, a first power control request to a power controller to request reduction of the output power of the fuel cell stack to the recommended power value;

7. The method according to Claim 6, further comprising:
determining the current temperature of the fuel cell stack; and
stopping the sending of the first power control request when the current temperature is less than or equal to the predetermined temperature threshold;

8. The method according to Claim 6, further comprising:
determining the current output power of the fuel cell stack; and
stopping the sending of the first power control request when the duration for which the current output power equals the recommended power value is greater than a third predetermined duration.

9. The method according to claim 7 or 8, further comprising:
sending a second power control request to the power controller to request the power controller to reduce the output power of the fuel cell stack to the target power value.

10. The method according to claim 6, wherein the fuel cell stack is deployed in a vehicle, and the power controller is a vehicle controller of the vehicle.

11. An apparatus (700) for controlling the power of a fuel cell stack, comprising:
a determination unit (702), configured to determine to change the output power of the fuel cell stack to a target power value;
a temperature detection unit (704), configured to determine the temperature of the fuel cell stack; and
a power adjustment unit (706), configured to adjust the output power of the fuel cell stack when the temperature of the fuel cell stack is greater than or equal to a predetermined temperature threshold.

12. A controller, comprising:
at least one processor; and
a memory, coupled to the at least one processor, and having instructions stored thereon, wherein the instructions, when executed by the at least one processor, cause the controller to perform the method according to any one of Claims 1 to 10.

13. A vehicle, comprising a fuel cell system and a controller according to claim 12.

14. A program product, comprising machine-executable instructions, which, when executed, cause a machine to perform the steps of the method according to any one of claims 1 to 10.
